# EUROPÄISCHE PATENTSCHRIFT

(11) **EP 2 841 489 B1**
(45) Veröffentlichungstag und Bekanntmachung des Hinweises auf die Patenterteilung: **05.08.2015**
(21) Anmeldenummer: 13720273.5
(22) Anmeldetag: 10.04.2013
(51) Int. Cl.: C08G 77/26

(54) **VERFAHREN ZUR HERSTELLUNG VON AMINOGRUPPEN AUFWEISENDEN ORGANOSILICIUMVERBINDUNGEN**
METHOD FOR PRODUCING ORGANOSILICON COMPOUNDS WHICH HAVE AMINO GROUPS
PROCÉDÉ DE PRODUCTION DE COMPOSÉS ORGANOSILICIÉS À GROUPES AMINO

(30) Priorität: 27.04.2012 DE 102012207062
(43) Veröffentlichungstag der Anmeldung: 04.03.2015
(73) Patentinhaber: Wacker Chemie AG, 81737 München (DE)
(72) Erfinder: FRITZ-LANGHALS, Elke, 85521 Ottobrunn (DE)
(74) Vertreter: Fritz, Helmut
(86) Internationale Anmeldenummer: PCT/EP2013/057456
(87) Internationale Veröffentlichungsnummer: WO 2013/160104

(56) Entgegenhaltungen:
- DE-A1- 19 733 168

## Beschreibung

Die Erfindung betrifft ein Verfahren zur Herstellung von Aminogruppen aufweisenden Organosiliciumverbindungen mit einem geringen Anteil an Si-OH- und Si-OR-Gruppierungen unter Verwendung von (Aminoalkyl)alkoxysilanen in Gegenwart von Katalysatoren.

Aminoalkylpolysiloxane werden in der Technik vielseitig eingesetzt. Z.B. können Block-Copolymere durch Polyaddition unter Verwendung von Isocyanaten hergestellt werden. Durch Kombination verschiedener Polymerblöcke ist so eine Vielzahl von Produkten mit maßgeschneiderten Eigenschaften darstellbar. Beim Aufbau von Block-Copolymeren spielt die Reinheit der eingesetzten Aminoalkylpolysiloxane eine große Rolle. Die Kettenenden müssen zu einem hohen Grad durch Aminogruppen funktionalisiert sein, da sonst keine Block-Copolymeren mit hohen Molekulargewichten erreicht werden können.

Verfahren zur Darstellung von Aminoalkylpolysiloxanen sind bereits bekannt. US-A-5461134 beschreibt ein Äquilibrierverfahren unter Verwendung von 1,3-Bis(3-aminopropyl)tetramethyldisiloxan, cyclischen Siloxanen und Tetramethylammoniumhydroxid als Katalysator. Dieses Verfahren ist umständlich, da es lange Reaktionszeiten erfordert und die cyclischen Siloxane in großem Überschuss zugesetzt und nach der Umsetzung wieder durch Strippen entfernt werden müssen. Dies gilt auch für das in EP-B-0739372 offenbarte analoge Verfahren zur Darstellung von Aminoalkylpolysiloxanen mit höheren Molekulargewichten. US-A-4633002 beschreibt ein Verfahren zur Herstellung von Aminoalkylpolysiloxanen, bei dem Silanol-terminierte Siloxane mit Amin-funktionellen Silanen in Gegenwart organometallischer Katalysatoren, insbesondere Zinnverbindungen umgesetzt werden. Von Nachteil bei diesem Verfahren sind die notwendigen hohen Temperaturen von ca. 275°C, die aufgrund von Zersetzungsprozessen wie dort berichtet zu Gelbfärbungen des Reaktionsprodukts führen.

EP-A-0628589 beschreibt ein Verfahren zur Herstellung von Aminoalkylpolysiloxanen aus Silanol-terminierten Siloxanen, Amin-funktionellen Silanen und einer Kombination aus den Katalysatoren Barium- bzw. Strontiumhydroxid und Natriumborat bzw. Natriumphosphat. Einer technischen Anwendung dieses Verfahrens steht insbesondere die Toxizität der Schwermetalle Barium und Strontium entgegen.

Bei Äquilibrierungsreaktionen besteht außerdem der prinzipielle Nachteil, dass Produkte mit einem verhältnismäßig hohen Silanolanteil erhalten werden. Si-OH-Kettenenden fungieren bei einer nachfolgenden Reaktion mit Diisocyanaten aber als chemisch labiler Kettenstopper und verhindern dadurch das Erreichen hoher Molekulargewichte. Ein weiterer Nachteil der Anwesenheit nicht-umgesetzter Si-OH-Kettenenden in den Aminoalkylpolysiloxanen ist, dass an diesen ein hydrolytischer Kettenabbau einsetzen kann. Solche Materialien zeigen daher eine geringere Stabilität in Gegenwart von Feuchtigkeit.

US-A-2011/301374 beschreibt ein Verfahren, wonach verbleibende Si-OH-Kettenenden durch Umsetzung mit Silazanen in die entsprechenden Aminoalkylgruppen überführt werden können. Zur Erreichung hoher Umsetzungsgrade sind demnach zwei Reaktionsschritte erforderlich.

US-B-7238768 beschreibt die Herstellung von aminofunktionellen Polysiloxanen durch Umsetzung von Hydroxy-funktionellen Polysiloxanen mit einem Unterschuss an aminofunktionellen Silanen bezogen auf die eingesetzten Si-OH-Gruppen und in Gegenwart von Carbonsäuren. Nach der dort offenbarten Anweisung erfolgt parallel zur Reaktion des (Aminoalkyl)alkoxysilans mit den Si-OH-Gruppen in situ eine Umsetzung der Si-OH-Gruppen mit zugesetztem Alkohol unter Bildung von Si-O-Alkyl-Gruppen. Da bei Stopperungsreaktionen mit Alkoxysilanen in jedem Fall Alkohole, in der Regel hochreaktive Alkohole wie Methanol oder Ethanol, gebildet werden, ist von einer analogen Reaktion mit dem freiwerdenden Alkohol auszugehen.

Wie dort beschrieben enthalten die hergestellten Aminoalkylpolysiloxane ausnahmslos sowohl Si-OH als auch Si-O-Alkyl-Gruppen.

Nach der in US-B-7238768 offenbarten Anweisung erfolgt parallel zur Reaktion des (Aminoalkyl)alkoxysilans mit den Si-OH-Gruppen (der eigentlichen Stopperungsreaktion), zudem eine Kettenverlängerung durch die Reaktion von Si-OH-Einheiten mit Si-OH-Einheiten unter Wasserabspaltung, die ebenfalls durch Einwirkung des Katalysators katalysiert wird.

In EP-A-1580215 wird zudem berichtet, dass unter den in US-B-7238768 angegebenen Bedingungen gelb gefärbte Produkte entstehen, die eine geringe Lagerstabilität aufweisen.

Das Verfahren ist daher nicht zur Herstellung von aminofunktionellen Polysiloxanen mit einem geringen Anteil an Si-OH-Gruppen und Si-O-Alkylgruppen geeignet. Als labiler Kettenstopper wirken neben den Si-OH-Gruppen auch die Si-O-Alkyl-Gruppen, weil diese bei der Lagerung in Gegenwart von Luftfeuchte hydrolytisch langsam in Si-OH-Gruppen übergehen und dabei flüchtige Alkohole freisetzen, wobei die auf diesem Weg erzeugten Si-OH-Gruppen die o.g. Nachteile haben.

Das Verfahren ist außerdem nicht zur Herstellung von aminofunktionellen Polysiloxanen mit einem konstanten Molekulargewicht geeignet, da durch Kettenkondensation Produkte mit deutlich erhöhtem Molekulargewicht gebildet werden. Eine konstante Kettenlänge ist aber für die o.g. Anwendungen in Block-Copolymeren von großer Bedeutung, da diese für die physikalischen Eigenschaften der erzeugten Materialien verantwortlich ist.

Gelbfärbungen und verminderte Lagerstabilität mindern ebenfalls die Qualität der Produkte.

US-A-6284860 beschreibt die Umsetzung von OH-terminierten Organopolysiloxanen mit Di- und Trialkoxy(aminoalkyl)silanen in Gegenwart von Brønstedt- oder Lewis-Säuren unter Bildung von Organopolysiloxanmassen, die Anteile von etwa 30 bis 60 % Si-O-Alkyl-Gruppen enthalten.

Gemäß der in US-A-6284860 gegebenen Anweisung werden mindestens stöchiometrische Mengen Säure bezogen auf die vorhandenen Si-OH-Gruppen für die Umsetzung benötigt, die dann als Amin-Salze im Reaktionsprodukt verbleiben.

Dieses Verfahren ist daher ungeeignet zur Herstellung von aminofunktionellen Polysiloxanen mit einem geringen Anteil an Si-O-Alkylgruppen. Es ist außerdem ungeeignet, da die entstehenden hohen Salzgehalte zu einer Verschlechterung der physikalischen Eigenschaften der Zielprodukte, wie z.B. der Rheologie und der optischen Transparenz, führen.

Gegenstand der Erfindung ist ein Verfahren zur Herstellung von aminofunktionellen Polyorganosiloxanen, bei dem
(A) Organosiloxane, welche Si-OH-Gruppen enthalten, mit
(B) mindestens stöchiometrischen Mengen Monoalkoxy(aminoalkyl)-silanen bezogen auf die Si-OH-Gruppen,
(C) in Gegenwart mindestens einer Säure als Katalysator umgesetzt werden.

Es wurde nun überraschend gefunden, dass Aminoalkylpolysiloxane mit einem geringen Anteil an Si-OH-Gruppen und Si-O-Alkyl-gruppen durch Umsetzung von Hydroxypolysiloxanen (A) mit mindestens stöchiometrischen Mengen an Monoalkoxy(aminoalkyl)-silanen (B) in Gegenwart saurer Katalysatoren hergestellt werden können.

Die hergestellten aminofunktionellen Polyorganosiloxane weisen vorzugsweise einen Anteil an Si-OH-Gruppen und Si-O-Alkyl-Gruppen von zusammen weniger als 5 Mol-% bezogen auf die Aminoalkylgruppen auf.

Das erfindungsgemäße Verfahren ist einfach durchzuführen und führt zu Produkten mit einer hohen Reinheit. Nebenreaktionen, wie z.B. die Bildung von Si-O-Alkyl-Gruppen, finden nur in sehr geringem Umfang statt. Die Kettenlänge des Polysiloxans bleibt im Wesentlichen, bis auf die hinzutretenden Stopperungs-einheiten, konstant. Kettenkondensationsreaktionen finden höchstens in einem unbedeutenden Umfang statt. Die erhaltenen aminofunktionellen Polysiloxane sind klar und farblos.

Ein weiterer Vorteil ist, dass bei dem erfindungsgemäßen Verfahren stöchiometrische oder geringe Überschüsse an (Amino-alkyl)alkoxysilan (B) ausreichend sind, um Produkte mit einem geringen Anteil an Si-OH-Gruppen und Si-O-Alkylgruppen zu erhalten. Die (Aminoalkyl)alkoxysilane (B) stellen die teuerste Komponente bei der Herstellung der Aminoalkylpolysiloxane dar, daher ist das erfindungsgemäße Verfahren besonders wirtschaftlich.

Vorzugsweise werden aminofunktionelle Polysiloxane der allgemeinen Formel I

**(SiO_{4/2})ₖ(R¹SiO_{3/2})ₘ(R¹₂SiO_{2/2})ₚ(R¹₃SiO_{1/2})_{q}[O_{1/2}SiR¹₂-R-NR²R³]₈[O_{1/2}H]ₜ** (I),

durch Umsetzung von Organosiloxanen der allgemeinen Formel (II)

**(SiO_{4/2})ₖ(R¹SiO_{3/2})ₘ(R¹₂SiO_{2/2})ₚ(R¹₃SiO_{1/2})_{q}[O_{1/2}H]ᵣ** (II),

mit mindestens der stöchiometrischen Menge eines Mono-alkoxy(aminoalkyl)silans der allgemeinen Formel (III)

**R²R³N-R-SiR¹₂(OR⁴)** (III),

in Gegenwart mindestens einer Brønstedt- oder einer Lewis-Säure hergestellt,
wobei
- **R**: einen unsubstituierten oder halogensubstituierten Alkylenrest mit 1 bis 12 C-Atomen,
- **R^{x}**: Wasserstoff oder einen unsubstituierten oder mit Substituenten, die ausgewählt werden aus -CN und Halogen substituierten C₁-C₁₀ - Kohlenwasserstoffrest,
- **R¹**: ein Wasserstoffatom oder einen unsubstituierten oder mit Substituenten, die ausgewählt werden aus -CN, NR^{x}₂, COOH, COOR^{x}, -Halogen, -Acryl, -Epoxy, -SH, -OH und -CONR^{x}₂ substituierten Si-C gebundenen C₁-C₂₀ -Kohlenwasserstoffrest oder C₁-C₁₅ -Kohlenwasserstoffoxyrest, in denen jeweils eine oder mehrere, einander nicht benachbarte Methyleneinheiten durch Gruppen -O-, -CO-, -COO-, -OCO-oder -OCOO-, -S-, oder NR^{x} ersetzt sein können und in denen eine oder mehrere, einander nicht benachbarte Methineinheiten durch Gruppen -N=, -N=N-, oder -P= ersetzt sein können,
- **R²** und **R³**: Wasserstoff oder unverzweigte, verzweigte oder cyclische gesättigte oder ungesättigte Alkylgruppe mit 1 bis 12 C-Atomen oder Arylgruppe oder Aralkylgruppe, wobei einzelne nicht benachbarte Methyleneinheiten durch Stickstoffatome oder Sauerstoffatome ersetzt sein können,
- **R⁴**: lineare oder verzweigte Alkylgruppe mit 1 bis 8 C-Atomen, wobei nicht-benachbarte Methyleneinheiten durch Sauerstoffe ersetzt sein können,
- **s**: Werte von mindestens 1,
- **r**: Werte von mindestens 1,
- **s + t**: den Wert von r und
- **k + m** + **p + q**: Werte von mindestens 2 bedeuten
und s : t größer oder gleich 10 beträgt.

Der Alkylenrest **R** kann unverzweigt, verzweigt oder cyclisch, gesättigt oder ungesättigt sein. Bevorzugt ist **R** ein zweiwertiger unverzweigter oder verzweigter gesättigter Alkylenrest mit 1 bis 8 C-Atomen, besonders bevorzugt mit 2 bis 4, ganz besonders bevorzugt mit 3 C-Atomen, inbesondere bevorzugt eine n-Propylengruppe.

**R¹** weist vorzugsweise 1 bis 12 Atome, insbesondere 1 bis 6 Atome, vorzugsweise nur Kohlenstoffatome oder ein Alkoxysauerstoffatom und sonst nur Kohlenstoffatome auf. Vorzugsweise ist **R¹** ein geradkettiger, verzweigter oder cyclischer C₁-C₆-Alkylrest. Besonders bevorzugt sind die Reste Methyl, Ethyl, Phenyl, Vinyl und Trifluorpropyl.

Bevorzugt sind **R²** und **R³** unabhängig voneinander Wasserstoff oder unverzweigte, verzweigte oder cyclische gesättigte oder ungesättigte Alkylgruppe mit 1 bis 6 C-Atomen oder Arylgruppe, wobei nicht benachbarte Methyleneinheiten durch Stickstoffatome oder Sauerstoffatome ersetzt sein können.

Besonders bevorzugt sind **R²** und **R³** unabhängig voneinander Wasserstoff oder C₁-C₅ Alkylgruppe, wobei einzelne nicht benachbarte Methylengruppen durch Stickstoffatome ersetzt sein können.

Ganz besonders bevorzugt sind **R²** und **R³** Wasserstoff.

Bevorzugt ist **R⁴** eine lineare oder verzweigte Alkylgruppe mit 1 bis 5 C-Atomen, wobei bevorzugt 1 bis 2 nicht benachbarte Methyleneinheiten durch Sauerstoffe ersetzt sein können. Besonders bevorzugt sind Alkylgruppen mit 1 bis 5 C-Atomen, wobei besonders bevorzugt eine Methylengruppe durch Sauerstoff ersetzt ist.

Beispiele für Reste **R⁴** sind Methyl, Ethyl, n-Propyl, i-Propyl 2-Methoxyethyl oder 2-Methoxypropyl.

Bevorzugt ist der Anteil an Si-OH-Gruppen in den Verbindungen der allgemeinen Formel I gering gegenüber dem Anteil an aminofunktionellen Alkylgruppen. Bevorzugt nimmt das Verhältnis s : t in der allgemeinen Formel I Werte von größer oder gleich 20 an, besonders bevorzugt Werte von größer oder gleich 50.

Das aminofunktionelle Organosiloxan der allgemeinen Formel I kann linear, cyclisch oder verzweigt sein.

Die Summe von **k, m, p, q,** s und **t** ist vorzugsweise eine Zahl von 3 bis 20000, insbesondere 8 bis 1000.

Bevorzugte verzweigte Organosiloxane sind die Organosiliconharze, welche entsprechend der allgemeinen Formel I T- und Q-Einheiten enthalten, d.h. **k + m** > 0. Besonders bevorzugt sind Harze, bei denen **k + m** mindestens 5 % und höchstens 90 % bezogen auf die Summe von **k, m, p, q, s und** t ist.

Bevorzugte lineare aminofunktionelle Organosiloxane sind die endständig aminofunktionalisierten Organosiloxane der allgemeinen Formel (Ia),

**(R¹₂SiO_{2/2})ₚ(R¹₃SiO_{1/2})_{q}[O_{1/2}SiR¹₂-R-NR²R³]ₛ[O_{1/2}H]ₜ**

mit **s + t + q =** 2,
wobei **q** Werte von 0 oder 1 einnehmen kann.
p nimmt bevorzugt Werte von 1 bis 20000 an, insbesondere von 8 bis 1000.

Besonders bevorzugte lineare aminofunktionelle Organosiloxane sind die α,ω-endständig aminofunktionalisierten Organosiloxane mit **q** = 0 und **s + t** = 2.

Bevorzugt werden als Katalysator Brønstedt-Säuren mit pKₛ-Werten zwischen - 10 und + 5, eingesetzt, beispielsweise Halogenwasserstoffsäuren, Sauerstoffsäuren der Elemente der 3. bis 7. Hauptgruppe, deren saure Salze und saure Ester, wobei ein oder mehrere Sauerstoffe durch Halogen ersetzt sein können, z.B. Kohlensäure, salpetrige Säure, Salpetersäure, phosphorige Säure, Alkalimetalldihydrogenphosphit, Mono- oder Diester der phosphorigen Säure mit C₁- bis C₂₀-Alkoholen, Phosphorsäure, Alkalimetalldihydrogenphosphat, Mono- oder Diester der Phosphorsäure mit C₁- bis C₂₀-Alkoholen, schwefelige Säure, Schwefelsäure, Alkalimetallhydrogensulfat, Halbester der Schwefelsäure mit C₁- bis C₂₀-Alkoholen, Chlorsäure und Perchlorsäure, Bromsäure und Perbromsäure, Iodsäure und Periodsäure, Tetrafluorborsäure, Hexafluorphosphorsäure, C₁-bis C₂₀-Carbonsäuren, die 1 bis 3 weitere Carbonsäuregruppen enthalten können, H-acide organische Säuren wie beispielsweise Ascorbinsäure und Pikrinsäure, Sauerstoffsäuren der Elemente Schwefel und Phosphor, die einen an Schwefel bzw. Phosphor kovalent gebundenen C₁- bis C₂₀-Kohlenstoffrest tragen, beispielsweise C₁- bis C₂₀-Sulfon- oder Phosphonsäuren, Amidosulfonsäuren und Amidophosphonsäuren, Iso- und Heteropolysäuren. Isopolysäuren sind Kondensate anorganischer mehrbasiger Säuren mit einer Zentralatomsorte ausgewählt aus Si, P, V, Mo und W, z.B. polymere Kieselsäure, Molybdän- und Wolframsäure. Heteropolysäuren sind anorganische Polysäuren mit mindestens 2 verschiedenen Zentralatomen aus jeweils mehrbasigen Sauerstoffsäuren eines Metalls, insbesondere Cr, Mo, V, W, und eines Nichtmetalls, insbesondere As, I, P, Se, Si, Te, z.B. 12-Molybdatophosphorsäure (H₃[PMo₁₂O₄₀]) oder 12-Wolframatophosphorsäure (H₃ [PW₁₂O₄₀]).

Weitere Beispiele sind Carboxylgruppen- oder Sulfonsäuregruppen-haltige organische Polymere, welche linear, verzweigt oder vernetzt sein können. Die Polymere enthalten bevorzugt 0,1 Mol bis 10 Mol, besonders bevorzugt 1 Mol bis 5 Mol Carbonsäure- bzw. Sulfonsäuregruppen pro kg Polymer.

Bevorzugt sind die Carboxylgruppen-haltigen und Sulfonsäuregruppen-haltigen organischen Polymere vernetzt, d.h. sie liegen als Harze vor. Das polymere Grundgerüst der Harze besteht beispielsweise aus Polykondensaten von Phenol und Formaldehyd, aus Copolymerisaten von Styrol und Divinylbenzol oder aus Copolymerisaten von Methacrylaten und Divinylbenzol,

Bevorzugt sind auch sulfatiertes Aluminiumoxid und saure Schichtsilikate, beispielsweise Montmorillonite.

Bevorzugt sind auch Brønstedt-Lewis-Säure-Komplexe, wie z.B. Komplexe zwischen Lewis-sauren Halogeniden, beispielsweise AlCl₃, PCl₃, PCl₅, FeCl₃ oder ZnCl₂ und Wasser oder Aminen.

Die Komplexe können auch durch Reaktion der Lewis-Säure mit dem im Reaktionsgemisch vorhandenen Wasser in situ gebildet werden.

Besonders bevorzugt sind Brønstedt-Säuren mit pKₛ-Werten zwischen - 10 und + 2, ganz besonders bevorzugt sind Brønstedt-Säuren mit pKₛ-Werten zwischen - 10 und + 1.

Bei der Verwendung von Brønstedt-Säuren (Protonendonatoren) als Katalysatoren erfolgt eine Protonenübertragung auf die basischen Aminfunktionalitäten in den Verbindungen der allgemeinen Formeln I und III, der Grad der Protonenübertragung hängt dabei vom jeweiligen Säure-Base-Gleichgewicht ab. Die protonierten Verbindungen der allgemeinen Formeln Ia und IIIa

**(SiO_{4/2})ₖ(R¹SiO_{3/2})ₘ(R¹₂SiO_{2/2})ₚ(R¹₃SiO_{1/2})_{q}[O_{1/2}SiR¹₂-R-NH+R²R³]ₛ[O_{1/2}H]ₜ** (Ia),

**R²R³HN⁺-R-SiR¹₂ (OR⁴)** (IIIa),

stellen daher ebenfalls Katalysatoren im Sinne der Erfindung dar. **R, R¹, R², R³, R⁴, k, m, p, q, s** und t weisen die bei den allgemeinen Formeln I und III angegebenen Bedeutungen auf.

Katalysatoren im Sinne der Erfindung sind auch die durch Protonierung von Stickstoffbasen mit den genannten Brønstedt-Säuren gebildeten Salze.

Geeignete Stickstoffbasen sind Amine **R⁵R⁶R⁷N,** worin die Reste **R⁵, R⁶** und **R⁷** unabhängig voneinander die Bedeutung Wasserstoff oder unverzweigte, verzweigte oder cyclische gesättigte oder ungesättigte Alkylgruppe mit 1 bis 12 C-Atomen oder Arylgruppe oder Aralkylgruppe, wobei einzelne nicht benachbarte Methyleneinheiten durch Stickstoffatome oder Sauerstoffatome ersetzt sein können, haben. Beispiele hierfür sind Ammoniak, Methyl-amin, Ethylamin, Ethylendiamin, Dimethylamin, Triethylamin, Butylamin, Diisobutylamin, Anilin oder N-Methylanilin. Die Reste können auch über Kohlenstoff-, Sauerstoff- oder Stickstoffatome miteinander verbunden sein. Beispiele hierfür sind Piperidin, Piperazin, Morpholin, Pyrrolidin, 1,8-Diaza-bicyclo[5.4.0]undec-7-en, 1,5-Diazabicyclo[4.3.0]non-5-ene, 1,4-Diazabicyclo[2.2.2]octan.

Geeignete Stickstoffbasen sind auch mehrfach ungesättigte nicht-aromatische oder aromatisch ungesättigte heterocyclische Stickstoffbasen, beispielsweise Pyridin, Pyrimidin oder Imidazol.

Katalysatoren im Sinne der Erfindung sind auch Brønstedt-Lewis-Säure-Komplexe, wie z.B. Komplexe zwischen Lewis-sauren Halogeniden, beispielsweise AlCl₃, PCl₃, PCl₅, FeCl₃ oder ZnCl₂ und Wasser oder Aminen.

Die Komplexe können auch durch Reaktion der Lewis-Säure mit dem im Reaktionsgemisch vorhandenen Wasser in situ gebildet werden.

Beispiele für die eingesetzten Säuren sind Chlorwasserstoff, Bromwasserstoff, Perchlorsäure, Schwefelsäure, Methylsulfat, Methansulfonsäure, Benzolsulfonsäure, Trifluormethansulfonsäure, Tetrafluorborsäure, Phosphorsäure, Salpetersäure, Chloressigsäure, Dichloressigsäure, Trichloressigsäure, Trifluoressigsäure, Benzoesäure, Phthalsäure, Oxalsäure, Malonsäure, Bernsteinsäure, Fumarsäure, Maleinsäure und deren Ammoniumsalze, beispielsweise Ammoniumchlorid, Ammoniumsulfat, Methylammoniumchlorid, Triethylammoniumchlorid, Ammoniumtrifluormethansulfonat und Ammoniumtrifluoracetat.

Die Säuren werden in Mengen von höchstens 20 Gewichtsprozent, bevorzugt höchstens 10 Gewichtsprozent, besonders bevorzugt von höchstens 1 Gewichtsprozent und ganz besonders bevorzugt von 0,1 % und mindestens 0,1 ppm, bevorzugt mindestens 1 ppm, besonders bevorzugt mindestens 5 ppm und ganz besonders bevorzugt von mindestens 10 ppm, jeweils bezogen auf die gesamte Reaktionsmasse, eingesetzt.

Bevorzugt wird das Verfahren bei Temperaturen von mindestens 50°C, besonders bevorzugt von mindestens 90°C durchgeführt, und höchstens bei 200°C, besonders bevorzugt bei höchstens 150°C.

Bevorzugt wird das Verfahren unter Normaldruck oder unter vermindertem Druck durchgeführt. Besonders bevorzugte Drucke liegen zwischen maximal 500 mbar und 1 mbar.

Das erfindungsgemäße Verfahren kann als Batchreaktion, als Semi-batch-reaktion oder kontinuierlich ausgeführt werden. Beispielsweise können die Reaktionskomponenten bei Umgebungstemperatur gemischt und die Mischung bis zur Reaktionstemperatur erwärmt werden. In einer weiteren bevorzugten Ausführungsform wird der Katalysator mit dem Monoalkoxy-(aminoalkyl)silan (B) gemischt und dieses dem Organosiloxan (A) zugefügt.

Vorzugsweise wird die Reaktion unter Durchmischung durchgeführt. Hierbei können die dem Fachmann bekannten Mischverfahren angewendet werden. Beispielsweise kann die Durchmischung durch Rühren erfolgen.

In einer bevorzugten Ausführungsform wird der bei der Umsetzung freiwerdende Alkohol während oder nach der Umsetzung aus dem Reaktionsgemisch entfernt. Die Entfernung erfolgt bevorzugt durch Destillation, beispielsweise durch Destillation unter vermindertem Druck. Die dem Fachmann bekannten Destillationstechniken, beispielsweise Gleichgewichtsdestillation über eine Kolonne, Kurzwegdestillation oder Dünnschichtverdampfung können hierzu verwendet werden.

Die erfindungsgemäße Reaktion kann auch kontinuierlich durchgeführt werden. Hierbei eignen sich die dem Fachmann bekannten technischen Ausführungen, beispielsweise Rohrreaktoren, Schlaufenreaktoren oder Rührkesselkaskaden.

Vorzugsweise wird das Monoalkoxy(aminoalkyl)silan (B) in einer molaren Menge von mindestens 1,01 und maximal 10 Äquivalenten bezogen auf vorhandene Si-OH-Einheiten, besonders bevorzugt in molaren Anteilen von mindestens 1,05 und maximal 2 Äquivalenten bezogen auf vorhandene Si-OH-Einheiten im Organosiloxan (A) eingesetzt.

Für die Berechnung des für eine vollständige Umsetzung notwendigen Überschusses an eingesetztem (Aminoalkyl)alkoxysilan (B) ist der im Hydroxypolysiloxan (A) vorhandene Wassergehalt zu berücksichtigen, da das (Aminoalkyl)alkoxysilan (B) mit Wasser unter Bildung des entsprechenden Disiloxans verbraucht wird. Dieses kann durch Entflüchtigung des Reaktionsgemisches nach der Umsetzung auf einfache Weise entfernt werden.

Es können bei der Umsetzung weitere Komponenten, beispielsweise Lösungsmittel, in Mengen von mindestens 1 % und höchstens 200 %, bevorzugt mindestens 10 % und höchstens 100 % bezogen auf die Gesamtreaktionsmasse eingesetzt werden. Falls Lösungsmittel verwendet werden, sind Lösungsmittel oder Lösungsmittelgemische mit einem Siedepunkt bzw. Siedebereich von bis zu 120° C bei 0,1 MPa bevorzugt. Beispiele für Lösungsmittel sind Ether wie Methyl-*tert*-butylether, Tetrahydrofuran oder Dioxan, Nitrile wie Acetonitril oder Propionitril, DMSO, Kohlenwasserstoffe wie beispielsweise Heptan, Methylcyclohexan oder Toluol.

Alle vorstehenden Symbole der vorstehenden Formeln weisen ihre Bedeutungen jeweils unabhängig voneinander auf. In allen Formeln ist das Siliciumatom vierwertig.

In den folgenden Beispielen sind, falls jeweils nicht anders angegeben, alle Mengen- und Prozentangaben auf das Gewicht bezogen, alle Drücke 0,10 MPa (abs.) und alle Temperaturen 20°C.

Alle Beispiele werden inertisiert bzw. unter Schutzgas ausgeführt.

### Beispiel 1

330 g α,ω-Bishydroxy-terminiertes Polydimethylsiloxan mit einem Mₙ von 2320 g/mol, bestimmt durch ¹H-NMR-Spektroskopie, entspr. 284 mMol Si-OH-Gruppen, und einem Wassergehalt von 250 ppm, entspr. 4,6 mmol, bestimmt durch Karl-Fischer Titration, wird mit 6 mg Ammoniumchlorid versetzt und auf 108-112°C erhitzt. Bei dieser Temperatur und ca. 100 mbar Druck werden 46,01 g (305 mMol, entspr. 1,07 Äquivalenten bezogen auf Si-OH) 97,5 proz. 3-Aminopropyldimethylmethoxysilan 1 in 18 Min. zudosiert und das gebildete Methanol als Destillat in einer gekühlten Vorlage aufgefangen. Nach einer Gesamtreaktionszeit von 2 Std. wird das Reaktionsprodukt, das α,ω-Bisaminopropyl-terminierte Polydimethylsiloxan, NMR-spektroskopisch untersucht. Jeweils bezogen auf die molare Menge an Aminopropyl-Endgruppen werden 0,2 % Si-OH-Endgruppen, 0,06 % Si-OMe-Gruppen, 2,3 % Methanol und 3,7 % Silan 1 detektiert.

Man erhält 10,1 g Destillat, bestehend zu 97,6 % aus Methanol und 2,4 % (0,24 g) eines Gemischs aus Silan 1 und cyclischen Siloxanen.

Durch Senkung des Drucks auf ca. 1 mbar werden überschüssiges Silan 1 und Methanol aus dem Produkt entfernt.

### Beispiel 2

Das Beispiel 1 wird unter Verwendung von 3 mg Ammoniumchlorid und 46,1 g (306 mmol, 1,08 Äquivalente) 97,6 proz. Silan 1 wiederholt. Die Gesamtreaktionszeit beträgt 3 Std.

Das Reaktionsprodukt enthält bei Reaktionsende, bezogen auf die molare Menge an Aminopropyl-Endgruppen, 0,2 % Si-OH-Endgruppen, 2,2 % Methanol und 3,2 % Silan 1. Si-OMe-Endgruppen sind nicht nachweisbar (Nachweisgrenze ca. 0,1 %).

Man erhält 9,8 g Destillat, bestehend zu 98 % aus Methanol und 2,0 % (0,20 g) eines Gemischs aus Silan 1 und cyclischen Siloxanen.

Durch Senkung des Drucks auf ca. 1 mbar werden überschüssiges Silan 1 und Methanol aus dem Produkt entfernt.

### Beispiel 3

330 g α,ω-Bishydroxy-terminiertes Polydimethylsiloxan mit einem Mₙ von 2320 g/mol, bestimmt durch ¹H-NMR-Spektroskopie, entspr. 284 mMol Si-OH-Gruppen, und einem Wassergehalt von 250 ppm, entspr. 4,6 mmol, bestimmt durch Karl-Fischer Titration, 6 mg Ammoniumchlorid und 46,01 g (305 mMol, entspr. 1,07 Äquiv. bezogen auf Si-OH) 97,5 proz. 3-Aminopropyldimethylmethoxysilan 1 werden bei Raumtemperatur gemischt und bei ca. 110 mbar unter Rühren auf 110°C erhitzt und dabei Methanol in eine gekühlte Vorlage abdestilliert. Die Aufheizdauer beträgt 22 min., die Gesamtreaktionszeit 2 Std.

Das Reaktionsprodukt enthält bei Reaktionsende, bezogen auf die molare Menge an Aminopropyl-Endgruppen, 0,6 % Si-OH-Endgruppen, 2,3 % Methanol und 3,6 % Silan 1. Si-OMe-Endgruppen sind nicht nachweisbar (Nachweisgrenze ca. 0,1 %).

Man erhält 10,0 g Destillat, bestehend zu 98 % aus Methanol und 2,0 % (0,20 g) eines Gemischs aus Silan 1 und cyclischen Siloxanen.

Durch Senkung des Drucks auf ca. 1 mbar werden überschüssiges Silan 1 und Methanol aus dem Produkt entfernt.

### Beispiel 4

110 g α,ω-Bishydroxy-terminiertes Polydimethylsiloxan mit einem Mₙ von 2366 g/mol, bestimmt durch ¹H-NMR-Spektroskopie, entspr. 93,0 mMol Si-OH-Gruppen, und einem Wassergehalt von 300 ppm, entspr. 1,8 mmol, bestimmt durch Karl-Fischer Titration, wird 108-112°C erhitzt. Bei dieser Temperatur und ca. 100 mbar Druck werden 14,3 g (96,1 mMol, entspr. 1,03 Äquiv. bezogen auf Si-OH) 99 proz. 3-Aminopropyldimethylmethoxysilan 1, in welchem 1,1 mg Ammoniumchlorid gelöst sind, in 10 Min. zudosiert und das gebildete Methanol als Destillat in einer gekühlten Vorlage aufgefangen. Nach einer Gesamtreaktionszeit von 1,5 (3 Std.) wird das Reaktionsprodukt, das α,ω-Bisaminopropyl-terminierte Polydimethylsiloxan, NMR-spektroskopisch untersucht. Jeweils bezogen auf die molare Menge an Aminopropyl-Endgruppen werden 0,35 % (0,19 %) Si-OH-Endgruppen, 0,02 % (0,03 %) Si-OMe-Gruppen, 3,2 % (2,3 %) Methanol und 3,5 % (1,0 %) Silan 1 detektiert.

Man erhält 2,9 g Destillat.

### Beispiel 5

551 g α,ω-Bishydroxy-terminiertes Polydimethylsiloxan mit einem Mₙ von 2366 g/mol, bestimmt durch ¹H-NMR-Spektroskopie, entspr. 466 mMol Si-OH-Gruppen, und einem Wassergehalt von 300 ppm, entspr. 9,2 mmol, bestimmt durch Karl-Fischer Titration, werden unter Ar mit einer Heizrate von 40°C pro Std. bei ca. 100 mbar erhitzt und währenddessen mit 76,8 g (512 mmol, entspr. 1,06 Äquivalente bezogen auf Si-OH unter Berücksichtigung der Verluste an 1 durch Umsetzung mit Wasser) 98,2 proz. Aminopropyldimethylmethoxysilan 1, in welchem der Katalysator (Angaben zum Kat. siehe Tabelle 1) gelöst ist, versetzt. Die Zugabe des Silans ist nach ca. 20 min. beendet. Während der Umsetzung wird das gebildete Methanol abdestilliert. Nach 140 min. werden 130°C erreicht. Man lässt bei dieser Temperatur noch eine Stunde nachreagieren und kühlt dann ab. Die erhaltene Destillatmenge beträgt bei Versuchsende ca. 16 g.

Zur Entflüchtigung wird das erhaltene Rohprodukt am Dünnschichtverdampfer entflüchtigt.

Kinetischer Verlauf der Umsetzung und Produktzusammensetzung siehe Tabelle 1.

Die Anteile an den Reaktanden und Produkten wurden durch 1H-NMR-Spektroskopie in d6-Benzol bestimmt.

**Tabelle 1: Stopperungsreaktionen (Bedingungen siehe Beispiel 5) mit verschiedenen Katalysatoren und Katalysatormengen.**

| Katalysator | Menge¹⁾ (ppm) | Rkt. zeit²⁾ t (Min.) | Si-OH (mol%)³ ) | Si-OMe (mol%) ³⁾ | Silan 1 (mol%) ³⁾ | MeOH (mol%) ³⁾ |
|---|---|---|---|---|---|---|
| NH₄Cl | 20 | 154 | 1,94 | < 0,1 | 5,7 | 14,2 |
| | | 180 | 0,24 | < 0,1 | 4,2 | 9,7 |
| | | 240 | 0,08 | < 0,1 | 3,9 | 1,4 |
| | | nach Dünnschichtung | 0,03 | ∼ 0,1 | 0,1 | 0,1 |
| NH₄Cl | 40 | 152 | 0,60 | < 0,1 | 3,9 | 2,6 |
| | | 170 | 0,13 | < 0,1 | 3,4 | 1,9 |
| | | 230 | 0,06 | < 0,1 | 3,2 | 1,3 |
| | | nach Dünnschichtung | 0,03 | ∼ 0,1 | 0,1 | 0,09 |
| NH₄Cl | 60 | 135 | 1,17 | < 0,1 | 5,0 | 3,9 |
| | | 152 | 0,22 | < 0,1 | 4,0 | 2,5 |
| | | 167 | 0,07 | < 0,1 | 4,1 | 2,0 |
| | | 237 | 0,06 | < 0,1 | 3,8 | 1,5 |
| | | nach Dünnschichtung | 0,02 | 0,09 | 0,1 | 0,05 |
| NH₄Cl | 80 | 140 | 0,29 | < 0,1 | 5,8 | 3,0 |
| | | 157 | 0,06 | < 0,1 | 5,6 | 2,2 |
| | | 170 | 0,04 | < 0,1 | 5,2 | 2,0 |
| | | 230 | 0,03 | < 0,1 | 3,8 | 2,5 |
| | | nach Dünnschichtung | 0,008 | 0,16 | 0,3 | 0,03 |
| CH₃SO₃H | 40 | 165 | 0,44 | 0,07 | 6,2 | 2,6 |
| | | 225 | 0,07 | < 0,1 | 3,6 | 1,9 |
| | | nach Dünnschichtung | 0,03 | 0,06 | 0,13 | 0,04 |
| CH₃SO₃H | 60 | 135 | 3,00 | < 0,1 | 5,9 | 2,9 |
| | | 152 | 1,03 | < 0,1 | 4,7 | 2,7 |
| | | 165 | 0,23 | < 0,1 | 3,7 | 1,8 |
| | | 235 | 0,06 | < 0,1 | 3,7 | 1,4 |
| | | nach Dünnschichtung | 0,01 | < 0,1 | 0,27 | 0,04 |
| CF₃COOH | 60 | 153 | 2,3 | 0,09 | 6,00 | 2,78 |
| | | 170 | 0,97 | 0,11 | 5,0 | 2,5 |
| | | 230 | 0,097 | 0,11 | 4,2 | 1,4 |
| | | nach Dünnschichtung | | | | |
| CCl₃COOH | 600 | 150 | 3,2 | 0,08 | 6,5 | 2,7 |
| | | 170 | 1,1 | 0,07 | 4,7 | 2,1 |
| | | 230 | 0,06 | 0,09 | 3,5 | 1,4 |
| | | 290 | 0,03 | 0,12 | 3,3 | 0,8 |
| | | nach Dünnschichtung | 0,02 | 0,16 | 0,04 | 0,02 |

| | | | | | | |
|---|---|---|---|---|---|---|
| ¹⁾bezogen auf die Gesamtreaktionsmasse; ²⁾bei einer Aufheizrate von 40°C /Std. bis 130°C; ³⁾bezogen auf den molaren Anteil an Aminoalkylgruppen des Aminopropylpolysiloxans. | | | | | | |

### Beispiel 6

558 g α,ω-Bishydroxy-terminiertes Polydimethylsiloxan mit einem Mₙ von 2366 g/mol, bestimmt durch ¹H-NMR-Spektroskopie, entspr. 466 mMol Si-OH-Gruppen, und einem Wassergehalt von 300 ppm, entspr. 9,2 mmol, bestimmt durch Karl-Fischer Titration, werden unter Ar mit einer Heizrate von 30°C pro Std. bis zu einer Temperatur von ca. 100°C erhitzt und währenddessen mit 78,0 g (520 mmol, entspr. 1,06 Äquivalente bezogen auf Si-OH unter Berücksichtigung der Verluste an 1 durch Umsetzung mit Wasser) 98,2 proz. Aminopropyldimethylmethoxysilan 1, in welchem 38,2 mg Ammoniumchlorid gelöst sind, versetzt. Die Zugabe des Silans ist nach ca. 20 min. beendet. Bei Erreichen der Endtemperatur von 100°C siedet das gebildete Methanol unter Rückfluss. Man ersetzt den Rückflusskühler durch eine Destillationsbrücke und erhitzt weiter bis auf 130°C, wobei das gebildete Methanol als Destillat übergeht. Nach einer weiteren Std. bei 130°C wird das Reaktionsgemisch abgekühlt und 1H-NMR-spektroskopisch unter-sucht. Gehalte in mol % bezogen auf den molaren Anteil an Aminoalkylgruppen des Aminopropylpolysiloxans: Si-OH: 1,2 %, Si-OMe: 0,6 %, Silan 1; 5,5 %, Methanol: 24%.

## Patentansprüche

1. Verfahren zur Herstellung von aminofunktionellen Polyorganosiloxanen, bei dem
(A) Organosiloxane, welche Si-OH-Gruppen enthalten, mit
(B) mindestens stöchiometrischen Mengen Monoalkoxy-(aminoalkyl)silanen bezogen auf die Si-OH-Gruppen,
(C) in Gegenwart mindestens einer Säure als Katalysator umgesetzt werden.

2. Verfahren nach Anspruch 1, bei dem aminofunktionelle Polysiloxane der allgemeinen Formel I
**(SiO_{4/2})ₖ(R¹SiO_{3/2})ₘ(R¹₂SiO_{2/2})ₚ(R¹₃SiO_{1/2})_{q}[O_{1/2}SiR¹₂-R-NR²R³]ₛ[O_{1/2}H]ₜ** (I),
durch Umsetzung von Organosiloxanen der allgemeinen Formel (II)
**(SiO_{4/2})ₖ(R¹SiO_{3/2})ₘ(R¹₂SiO_{2/2})ₚ(R¹₃SiO_{1/2})_{g}[O_{1/2}H]ᵣ** (II),
mit mindestens der stöchiometrischen Menge eines Mono-alkoxy(aminoalkyl)silans der allgemeinen Formel (III)
**R²R³N-R-SiR¹₂(OR⁴)** (III),
in Gegenwart mindestens einer Brønstedt- oder einer Lewis-Säure hergestellt werden,
wobei
**R** einen unsubstituierten oder halogensubstituierten Alkylenrest mit 1 bis 12 C-Atomen,
**R^{x}** Wasserstoff oder einen unsubstituierten oder mit Substituenten, die ausgewählt werden aus -CN und Halogen substituierten C₁-C₁₀ - Kohlenwasserstoffrest,
**R¹** ein Wasserstoffatom oder einen unsubstituierten oder mit Substituenten, die ausgewählt werden aus -CN, **NR^{x}₂,** COOH, **COOR^{x},** -Halogen, -Acryl, -Epoxy, -SH, -OH und **-CONR^{x}₂** substituierten Si-C gebundenen C₁-C₂₀ -Kohlenwasserstoffrest oder C₁-C₁₅ -Kohlenwasserstoffoxyrest, in denen jeweils eine oder mehrere, einander nicht benachbarte Methyleneinheiten durch Gruppen -O-, -CO-, -COO-, -OCO-oder -OCOO-, -S-, oder NR^{x} ersetzt sein können und in denen eine oder mehrere, einander nicht benachbarte Methineinheiten durch Gruppen -N=, -N=N-, oder -P= ersetzt sein können,
**R²** und **R³** Wasserstoff oder unverzweigte, verzweigte oder cyclische gesättigte oder ungesättigte Alkylgruppe mit 1 bis 12 C-Atomen oder Arylgruppe oder Aralkylgruppe, wobei einzelne nicht benachbarte Methyleneinheiten durch Stickstoffatome oder Sauerstoffatome ersetzt sein können,
**R⁴** lineare oder verzweigte Alkylgruppe mit 1 bis 8 C-Atomen, wobei nicht-benachbarte Methyleneinheiten durch Sauerstoffe ersetzt sein können,
**s** Werte von mindestens 1,
**r** Werte von mindestens 1,
**s + t** den Wert von **r und**
**k + m + p + q** Werte von mindestens 2 bedeuten
und **s : t** größer oder gleich 10 beträgt.

3. Verfahren nach Anspruch 2, bei dem **R** ein zweiwertiger unverzweigter Alkylenrest mit 1 bis 8 C-Atomen bedeutet.

4. Verfahren nach Anspruch 2 oder 3, bei dem **R¹** ein geradkettiger, verzweigter oder cyclischer C₁-C₆-Alkylrest ist.

5. Verfahren nach Anspruch 2 bis 4, bei dem **R²** und **R³** Wasserstoff sind.

6. Verfahren nach Anspruch 2 bis 5, bei dem **R⁴** Alkylgruppe mit 1 bis 5 C-Atomen bedeutet.

7. Verfahren nach Anspruch 1 bis 6, bei dem als Katalysator Bronstedt-Säuren mit pKₛ-Werten zwischen - 10 und + 5 eingesetzt werden.

8. Verfahren nach Anspruch 1 bis 7, welches bei Temperaturen von 50°C bis 150°C durchgeführt wird.

9. Verfahren nach Anspruch 1 bis 8, bei dem das Monoalkoxy-(aminoalkyl)silan (B) in einer molaren Menge von mindestens 1,01 und maximal 10 Äquivalenten bezogen auf vorhandene Si-OH-Einheiten im Organosiloxan (A) eingesetzt wird.

## Claims

1. Method for producing aminofunctional polyorganosiloxanes which comprises reacting
(A) organosiloxanes which contain Si-OH groups with
(B) at least stoichiometric amounts of monoalkoxy(aminoalkyl)silanes, based on the Si-OH groups,
(C) in the presence of at least one acid as catalyst.

2. Method according to Claim 1 wherein aminofunctional polysiloxanes of general formula I
**(SiO_{4/2})ₖ(R¹SiO_{3/2})ₘ(R¹₂SiO_{2/2})ₚ(R¹₃SiO_{1/2})_{q}[O_{1/2}SiR¹₂-R-NR²R³]ₛ[O_{1/2}H]ₜ** (I),
are obtained by reaction of organosiloxanes of general formula (II)
**(SiO_{4/2})ₖ(R¹SiO_{3/2})ₘ(R¹₂SiO_{2/2})ₚ(R¹₃SiO_{1/2})_{q}[O_{1/2}H]ᵣ** (II),
with at least the stoichiometric amount of a monoalkoxy(aminoalkyl)silane of general formula (III)
**R²R³N-R-SiR¹₂(OR⁴)** (III),
in the presence of at least one Brønstedt or Lewis acid,
where
**R** is an unsubstituted or halogen-substituted alkylene radical of 1 to 12 carbon atoms,
**R^{x}** is hydrogen, an unsubstituted C₁-C₁₀ hydrocarbyl radical or a C₁-C₁₀ hydrocarbyl radical substituted with substituents selected from -CN and halogen,
**R¹** is a hydrogen atom or a C₁-C₂₀ hydrocarbyl or C₁-C₁₅ hydrocarbyloxy radical which is bonded Si-C and is unsubstituted or substituted with substituents selected from **-CN, NR^{x}₂,** COOH, COOR^{x}, -halogen, -acryloyl, -epoxy, -SH, -OH and -CONR^{x}₂ and in each of which one or more mutually nonadjacent methylene units at a time may be replaced by groups -O-, -CO-, -COO-, -OCO- or -OCOO-, -S-, or **NR^{x}** and in each of which one or more mutually nonadjacent methine units may be replaced by groups -N=, -N=N-, or -P=,
**R²** and **R³** are each hydrogen or unbranched, branched or cyclic saturated or unsaturated alkyl of 1 to 12 carbon atoms or aryl or aralkyl where individual nonadjacent methylene units may be replaced by nitrogen atoms or oxygen atoms,
**R⁴** is linear or branched alkyl of 1 to 8 carbon atoms where nonadjacent methylene units may be replaced by oxygens,
**s** is not less than 1,
**r** is not less than 1,
**s + t** is equal to the value of **r,** and
**k + m + p + q** is not less than 2,
and s : **t** is not less than 10.

3. Method according to Claim 2 wherein **R** is a divalent unbranched alkylene radical of 1 to 8 carbon atoms.

4. Method according to Claim 2 or 3 wherein **R¹** is a straight-chain, branched or cyclic C₁-C₆ alkyl radical.

5. Method according to Claim 2 or 3 or 4 wherein **R²** and **R³** are each hydrogen.

6. Method according to Claim 2 or 3 or 4 or 5 wherein **R⁴** is alkyl of 1 to 5 carbon atoms.

7. Method according to Claim 1 or 2 or 3 or 4 or 5 or 6 wherein the catalyst used comprises Brønstedt acids having pKₐ values between -10 and +5.

8. Method according to Claim 1 or 2 or 3 or 4 or 5 or 6 or 7 conducted at temperatures of 50°C to 150°C.

9. Method according to Claim 1 or 2 or 3 or 4 or 5 or 6 or 7 or 8 wherein said monoalkoxy(aminoalkyl)silane (B) is used in a molar amount of not less than 1.01 and not more than 10 equivalents based on Si-OH units present in said organosiloxane (A).

## Revendications

1. Procédé de fabrication de polyorganosiloxanes aminofonctionnels, selon lequel
(A) des organosiloxanes, qui contiennent des groupes Si-OH, sont mis en réaction avec
(B) des quantités au moins stoechiométriques de monoalcoxy(aminoalkyl)silanes par rapport aux groupes Si-OH,
(C) en présence d'au moins un acide en tant que catalyseur.

2. Procédé selon la revendication 1, dans lequel des polysiloxanes aminofonctionnels de formule générale I
**(SiO_{4/2})ₖ(R¹SiO_{3/2})ₘ(R¹₂SiO_{2/2})ₚ(R¹₃SiO_{1/2})_{q}[O_{1/2}SiR¹₂-R-NR²R³]ₛ[O_{1/2}H]ₜ** (I),
sont fabriqués par mise en réaction d'organosiloxanes de formule générale (II)
**(SiO_{4/2})ₖ(R¹SiO_{3/2})ₘ(R¹₂SiO_{2/2})ₚ(R¹₃SiO_{1/2})_{q}[O_{1/2}H]ᵣ** (II),
avec une quantité au moins stoechiométrique d'un monoalcoxy(aminoalkyl)silane de formule générale (III)
**R²R³N-R-SiR¹₂(OR⁴)** (III),
en présence d'au moins un acide de Brønstedt ou de Lewis,
R signifiant un radical alkylène non substitué ou à substitution halogène, de 1 à 12 atomes C,
R^{x} signifiant l'hydrogène ou un radical hydrocarboné en C₁-C₁₀ non substitué ou substitué avec des substituants choisis parmi -CN et halogène,
R¹ signifiant un atome d'hydrogène ou un radical hydrocarboné en C₁-C₂₀ ou un radical oxyhydrocarboné en C₁-C₁₅ relié à Si-C, non substitué ou substitué avec des substituants choisis parmi -CN, NR^{x}₂, COOH, COOR^{x}, halogène, acryle, époxy, -SH, -OH et -CONR^{x}₂, dans lesquels une ou plusieurs unités méthylène non voisines les unes des autres peuvent être remplacées par des groupes -O-, -CO-, -COO-, -OCO- ou -OCOO-, -S- ou NR^{x}, et dans lesquels une ou plusieurs unités méthine non voisines les unes des autres peuvent être remplacées par des groupes -N=, -N=N- ou -P=,
R² et R³ signifiant hydrogène ou un groupe alkyle non ramifié, ramifié ou cyclique, saturé ou insaturé, de 1 à 12 atomes C, ou un groupe aryle ou un groupe aralkyle, des unités méthylène non voisines individuelles pouvant être remplacées par des atomes d'azote ou des atomes d'oxygène,
R⁴ signifiant un groupe alkyle linéaire ou ramifié, de 1 à 8 atomes C, des unités méthylène non voisines pouvant être remplacées par des oxygènes,
s signifiant des valeurs d'au moins 1,
r signifiant des valeurs d'au moins 1,
s + t signifiant la valeur de r, et
k + m + p + q signifiant des valeurs d'au moins 2,
et s:t étant supérieur ou égal à 10.

3. Procédé selon la revendication 2, dans lequel R signifie un radical alkylène bivalent non ramifié de 1 à 8 atomes C.

4. Procédé selon la revendication 2 ou 3, dans lequel R¹ signifie un radical alkyle en C₁-C₆ linéaire, ramifié ou cyclique.

5. Procédé selon les revendications 2 à 4, dans lequel R² et R³ signifient l'hydrogène.

6. Procédé selon les revendications 2 à 5, dans lequel R⁴ signifie un groupe alkyle de 1 à 5 atomes C.

7. Procédé selon les revendications 1 à 6, dans lequel des acides de Brønstedt ayant des valeurs pKₛ comprises entre -10 et +5 sont utilisés en tant que catalyseur.

8. Procédé selon les revendications 1 à 7, qui est réalisé à des températures de 50 °C à 150 °C.

9. Procédé selon les revendications 1 à 8, dans lequel le monoalcoxy(aminoalkyl)silane (B) est utilisé en une quantité molaire d'au moins 1,01 et d'au plus 10 équivalents par rapport aux unités Si-OH présentes dans l'organosiloxane (A).
